# FASCICULE DE BREVET EUROPEEN

(11) **EP 0 570 282 B1**
(45) Date de publication et mention de la délivrance du brevet: **04.09.1996**
(21) Numéro de dépôt: 93401214.7
(22) Date de dépôt: 13.05.1993
(51) Int. Cl.: C03C 27/04, B60J 10/02

(54) **Procédé pour l'adhesion d'un profil sur un vitrage et vitrage ainsi obtenu**
Verfahren zum Aufbringen eines Profils auf eine Glasscheibe und so erhaltene Glasscheibe
Method for the adhesion of a profile on a glass sheet and glazing thus obtained

(30) Priorité: 14.05.1992 FR 9205849
(43) Date de publication de la demande: 18.11.1993
(73) Titulaire: SAINT-GOBAIN VITRAGE, F-92400 Courbevoie (FR)
(72) Inventeur: Beyrle, André, F-60170 Irancy-le-Val (FR); l'Her, Anne, F-75018 Paris (FR)
(74) Mandataire: Muller, René

(56) Documents cités:
- EP-A- 0 332 344
- DE-A- 3 147 801
- US-A- 3 654 005
- US-A- 3 707 401
- US-A- 4 963 413

## Description

L'invention concerne un procédé pour l'adhésion d'un profil thermoplastique sur un vitrage. Ce profil peut être obtenu par différents procédés tels que l'encapsulation ou l'extrusion.

Il peut être formé notamment en périphérie du vitrage mais également en tout point du vitrage en vu par exemple du collage de l'embase d'un rétroviseur.

L'invention gardant un aspect général, nous examinerons plus particulièrement le cas du procédé d'encapsulation ou surmoulage d'un vitrage par un profil (ou joint) thermoplastique.

L'encapsulation des vitrages, notamment des vitrages automobiles peut se faire de deux façons.

La première méthode est le procédé RIM (moulage par injection réactive) qui consiste à injecter un mélange réactionnel de deux composants dans un moule pour former un polymère thermodurcissable sur la périphérie du vitrage.

On injecte par exemple un composant polyol et un composant isocyanate qui forme un polyuréthane comme joint d'encapsulation.

Cette méthode a l'inconvénient de nécessiter des moules relativement sophistiqués, ce qui entraîne des coûts de production relativement élevés.

Une autre méthode consiste à réaliser le profil de surmoulage sur le vitrage par injection d'une matière thermoplastique. Le coût est alors moins important que celui utilisant le procédé RIM. Ce procédé d'injection thermoplastique nécessite néanmoins des pressions élevées. Par conséquent, il n'est pas très adapté aux grands vitrages tels que les lunettes arrières ou les pare-brises de véhicules automobiles oui sous l'effet de ces pressions risquent de se briser. Par contre, il est tout à fait adapté aux petits vitrages tels que des vitres de custode pour véhicules automobiles.

Un matériau thermoplastique couramment utilisé est le chlorure de polyvinyle (PVC). Cependant, la présence de chlore dans les joints d'encapsulation en PVC peut constituer un problème notamment lorsque l'on est amené à recycler la matière plastique. En outre, le PVC utilise des plastifiants oui peuvent altérer certaines peintures de carrosseries de véhicules automobiles.

Il est par ailleurs connu du document US 3,707,401 des compositions de matières plastiques favorisant notamment l'adhésion de mousses métalliques sur du verre.

L'invention a pour objet une amélioration de cette méthode consistant à réaliser notamment un profil de surmoulage avec une matière thermoplastique.

L'invention propose l'utilisation d'une matière thermoplastique d'une autre nature que le PVC. Il s'agit de thermoplastiques élastomériques et plus particulièrement de thermoplastiques oléfiniques (ou à matrice oléfinique) tels qu'un polypropylène chargée EPDM. (EPDM = éthylène-propylène-diène-monomère).

Ces thermoplastiques sont apolaires et ont l'inconvénient d'avoir une mauvaise affinité avec d'autres matériaux et en particulier le verre.

L'invention a donc notamment pour objet un procédé d'encapsulation d'un vitrage permettant l'adhésion d'un joint d'encapsulation par injection d'un thermoplastique à matrice oléfinique, notamment un polypropylène chargé EPDM.

Selon l'invention, on réalise au moins sur la zone du vitrage à recouvrir du joint d'encapsulation, un traitement à base d'au moins un organosilane et d'une composition à base d'au moins une polyoléfine chlorée, que l'on désignera encore par la suite par composition de primage. Ce type de polyoléfine présente des affinités avec les thermoplastiques oléfiniques et elle procure une liaison satisfaisante et durable entre le joint d'encapsulation d'une part, et le verre ou éventuellement la couche émaillée recouvrant le verre d'autre part, par l'intermédiaire de l'organosilane.

Selon l'invention, le problème posé par les thermoplastiques oléfiniques qui ont une mauvaise affinité avec les autres matériaux est donc résolu par un procédé pour l'adhésion d'un profil thermoplastique sur un vitrage, notamment d'un vitrage de véhicule automobile, qui consiste à traiter au moins la zone à recouvrir de ce vitrage à l'aide d'un organosilane et d'une composition à base d'une polyoléfine chlorée dont la masse moléculaire est comprise entre 1000 et 300 000 et de préférence comprise entre 10 000 et 100 000.

Dans une forme de réalisation de l'invention, le traitement s'effectue en deux étapes : une première étape au cours de laquelle on dépose sur la partie du vitrage destinée à recevoir le profil thermoplastique une couche à base d'au moins un organosilane, et une seconde étape au cours de laquelle on dépose sur la première couche une composition à base d'au moins une polyoléfine chlorée.

Dans une variante avantageuse selon l'invention, le traitement est réalisé en une seule étape par le dépôt sur la partie du vitrage destinée à recevoir le profil, généralement la périphérie du vitrage, d'une composition à base de polyoléfine chlorée contenant un organosilane.

Selon une caractéristique de l'invention, le dépôt de la composition de primage se fait à température ambiante et il est suivi d'un traitement thermique à une température d' au moins 80°C.

Selon un mode préféré, le verre est maintenu à une température supérieure à 80°C lorsque l'on injecte le thermoplastique. L'adhésion entre le verre et le profil est ainsi encore améliorée.

Le procédé selon l'invention a l'avantage de ne pas nécessiter de manipulations d'isocyanate comme c'est souvent le cas pour ce type d'adhésion.

L'invention propose également un vitrage, notamment un vitrage de véhicule automobile qui présente un joint (ou profil) par exemple sur toute sa périphérie, ce joint étant constitué d'un thermoplastique élastomérique et de préférence d'un thermoplastique oléfinique.

Selon un mode préféré de l'invention, ce joint d'encapsulation est un polypropylène chargé EPDM.

Le vitrage ainsi réalisé présente l'avantage de ne pas nuire à l'environnement lors d'un recyclage éventuel du vitrage ou lors de sa destruction puisque le joint d'encapsulation ne contient pas de chlore. Et si le primaire contient du chlore, cette quantité apportée lors du dépôt de celui-ci est quasiment négligeable et ne présente aucun risque pour l'environnement.

En outre, en ne contenant pas de plastifiant, le joint n'est plus une cause d'altération pour certaines peintures.

De plus, ce type de joint présente une bonne tenue aux ultra-violets.

L'invention propose enfin une composition de primage pour traitement du vitrage.

Selon l'invention, la composition de primage est à base d'une polyoléfine chlorée oui de préférence est une polyoléfine chlorée modifiée, c'est-à-dire présentant des sites réactifs du type OH, COOH et elle contient en outre un organosilane et de préférence une époxysilane.

Plus particulièrement, la composition de primage selon l'invention est à base de polypropylène chloré isotactique greffé par de l'anhydride maléique.

Le chlore contenu dans la composition de primage doit être en quantité suffisamment importante de façon à assurer la mouillabilité lors du dépôt. Par contre, sa teneur ne doit tout de même pas être trop élevée de façon à ne pas nuire à l'adhésion.

Selon l'invention, la teneur en poids du chlore est comprise entre 10 et 40 % et de préférence comprise entre 25 et 30 % du poids de la composition de primage.

La masse moléculaire de la polyoléfine chlorée est comprise entre 1000 et 300 000 et de préférence comprise entre 10 000 et 100 000.

L'organosilane qui de préférence est un époxysilane, est présent à raison de 0,01 % à 10 % et de préférence à environ 1 % du poids de la composition de primage.

D'autres caractéristiques et avantages de l'invention apparaîtront dans la description des exemples suivants :

### Exemple 1 :

On fabrique un vitrage encapsulé pour véhicule automobile, par exemple un vitrage de custode en injectant un thermoplastique sur la périphérie de ce vitrage. Ce thermoplastique est un polypropylène chargé EPDM.

On dispose initialement d'un vitrage présentant une zone émaillée sur toute sa périphérie. On prépare une composition de primaire à base d'un polypropylène chloré isotactique greffé par l'anhydride maléique, la teneur en chlore est de 27 % environ. Cette composition contient également 1 % en poids de glycidyl-3-oxypropyl-triméthoxysilane.

On enduit la zone émaillée du vitrage destinée à être recouverte par le profil, de cette solution. L'enduction se fait à température ambiante. On élève ensuite la température du verre à 140°C. Le thermoplastique est ensuite injecté à une température voisine de 200°C dans un moule à 80°C.

Lors de l'injection du thermoplastique, le vitrage est maintenu à une température de 140°C. Le vitrage est ensuite démonté.

Après 24 heures, on mesure l'adhésion par pelage à 90°. Le résultat est présenté sous la forme Ho.

On effectue une seconde mesure H7 après un vieillissement de 7 jours passés à 70°C dans des conditions de cataplasme humide.

On recherche des valeurs supérieures à 40 N/cm pour Ho et supérieures à 10 N/cm pour H7. Les valeurs mesurées sont ici de : Ho = 90 N/cm et H7 = 60 N/cm.

### Exemple 2 :

On procède de la même façon que pour l'exemple 1 sauf lors de l'injection du thermoplastique, durant laquelle le vitrage n'a pas été maintenu à une température supérieure à 80°C.

Les valeurs mesurées sont : Ho = 5O N/cm et H7 = 3O N/cm.

Les résultats obtenus sont toujours suffisants mais, comparés à ceux de l'exemple 1, on note qu'il est préférable de maintenir le vitrage à température élevée lors de l'injection du thermoplastique.

### Exemple 3 :

On procède de la même façon que pour l'exemple 2 sauf qu'on n'élève pas la température du vitrage après enduction du primaire.

Les valeurs Ho et H7 sont alors toutes les deux supérieures à 10 N/cm et insuffisantes par rapport aux valeurs recherchées.

### Exemple 4

On fabrique un vitrage pour véhicule automobile, par exemple une lunette arrière sur laquelle on extrude un thermoplastique sur la périphérie. Ce thermoplastique est un polypropylène chargé EPDM.

Le dépôt de la composition avant extrusion est réalisé selon la méthode décrite dans l'exemple 1.

Les valeurs mesurées sont satisfaisantes.

## Revendications

1. Procédé pour l'adhésion d'un profit thermoplastique sur un vitrage, notamment un vitrage de véhicule automobile, caractérisé en ce que l'on traite au moins la zone à recouvrir de ce vitrage à l'aide d'un organosilane et d'une composition à base d'une polyoléfine chlorée dont la masse moléculaire est comprise entre 1 000 et 300 000 et on forme le profit thermoplastique.

2. Procédé selon la revendication 1, caractérisé en ce que l'on dépose sur la zone à recouvrir de ce vitrage, une couche à base d'organosilane et en ce que l'on recouvre cette couche de la compositon à base d'une polyoléfine chlorée.

3. Procédé selon la revendication 1, caractérisé en ce que l'on dépose sur la périphérie de ce vitrage, une composition à base de la polyoléfine chlorée contenant un organosilane.

4. Procédé selon l'une des revendications précédentes, caractérisé en ce que le ou les dépôts se font à température ambiante et en ce que l'on élève ensuite la température du verre au-dessus de 80°C.

5. Procédé selon la revendication 4, caractérisé en ce que l'on maintient le verre à une température supérieure à 80°C lors de l'injection du thermoplastique.

6. Procédé selon une des revendications 1 à 5, caractérisé en ce que la matière thermoplastique est un thermoplastique à matrice oléfinique.

7. Procédé selon la revendication 6, caractérisé en ce que la matière thermoplastique est un polypropylène chargé EPDM.

8. Vitrage, notamment vitrage de véhicule automobile résentant un profil obtenu par la mise en oeuvre du procédé selon une des revendications 1 à 7, caractérisé en ce que ce profil est un thermoplastique élastomérique et de préférence un thermoplastique oléfinique.

9. Vitrage selon la revendication 8, caractérisé en ce que le profil est un polypropylène chargé EPDM.

10. Vitrage selon l'une des revendications 8 ou 9, caractérisé en ce que le profil est un joint d'encapsulation.

11. Vitrage selon l'une des revendications 8 ou 9, caractérisé en ce que le profil est obtenu par extrusion.

12. Composition de primage pour l'adhésion d'une matière thermoplastique sur le verre selon une des revendications 1 à 7, ladite composition étant à base d'une polyoléfine chlorée dont la masse moléculaire est comprise entre 1 000 et 300 000 caractérisée en ce qu'elle contient en outre un organosilane et de préférence un époxysilane.

13. Composition de primage selon la revendication 12, caractérisée en ce qu'elle est à base d'une polyoléfine chlorée modifiée, de préférence un polypropylène chloré isotactique greffé par l'anhydride maléique.

14. Composition de primage selon l'une des revendications 12 ou 13, caractérisée en ce que la teneur en poids du chlore dans la polyoléfine chlorée est comprise entre 10 et 40 % et de préférence comprise entre 25 et 30 % du poids de la composition du primage.

15. Composition de primage selon l'une des revendications 12 à 14, caractérisée en ce que la masse moléculaire de la polyoléfine chlorée est comprise entre 1 000 et 300 000 et de préférence comprise entre 10 000 et 100 000.

16. Composition de primage selon l'une des revendications 12 à 15, caractérisée en ce que la teneur en organosilane est comprise entre 0,01 % et 10 % et de préférence égale à 1 %.

## Claims

1. Process for the adhesion of a thermoplastic section to a glazing, particularly a car glazing, characterized in that at least the area to be covered of said glazing is treated with the aid of an organosilane and a composition based on a chlorinated polyolefin, whose molecular weight is between 1,000 and 300,000 and the thermoplastic section is shaped.

2. Process according to claim 1, characterized in that on the area to be covered of said glazing is deposited a coating based on organosilane and in that said coating is covered with the composition based on a chlorinated polyolefin.

3. Process according to claim 1, characterized in that on the periphery of said glazing is deposited a composition based on chlorinated polyolefin containing an organosilane.

4. Process according to one of the preceding claims, characterized in that the deposit or deposits melt at ambient temperature and in that the temperature of the glass is then raised to above 80°C.

5. Process according to claim 4, characterized in that the glass is maintained at a temperature above 80°C during the injection of the thermoplastic.

6. Process according to claims 1 to 5, characterized in that the thermoplastic material is an olefinic matrix thermoplastic.

7. Process according to claim 6, characterized in that the thermoplastic material is an EPDM-filled polypropylene.

8. Glazing, particularly car glazing having a section obtained by the performance of the process according to one of the claims 1 to 7, characterized in that said section is an elastomeric thermoplastic and preferably an olefinic thermoplastic.

9. Glazing according to claim 8, characterized in that the section is an EPDM-filled polypropylene.

10. Glazing according to one of the claims 8 or 9, characterized in that the section is an encapsulating joint.

11. Glazing according to one of the claims 8 or 9, characterized in that the section is obtained by extrusion.

12. Priming composition for the adhesion of a thermoplastic material to the glass according to one of the claims 1 to 7, said composition being based on a chlorinated polyolefin with a molecular weight between 1,000 and 300,000, characterized in that it also contains an organosilane and preferably an epoxysilane.

13. Priming composition according to claim 12, characterized in that it is based on a modified, chlorinated polyolefin, preferably an isotactic, chlorinated polypropylene grafted by maleic anhydride.

14. Priming composition according to one of the claims 12 to 13, characterized in that the weight content of the chlorine in the chlorinated polyolefin is between 10 and 40% and preferably between 25 and 30% of the weight of the priming composition.

15. Priming composition according to one of the claims 12 to 14, characterized in that the molecular weight of the chlorinated polyolefin is between 1,000 and 300,000 and preferably between 10,000 and 100,000.

16. Priming composition according to one of the claims 12 to 15, characterized in that the organosilane content is between 0.01 and 10% and is preferably 1%.

## Patentansprüche

1. Verfahren zum Kleben eines thermoplastischen Profils auf eine Verglasung, insbesondere eine Verglasung eines Kraftfahrzeugs, **dadurch gekennzeichnet, daß** wenigstens der zu bedeckende Bereich der Verglasung mit einem Organosilan und einer Zusammensetzung auf der Grundlage eines chlorierten Polyolefins mit einer Molmasse von 1 000 bis 300 000 behandelt und das thermoplastische Profil aufgeformt wird.

2. Verfahren nach Anspruch 1, **dadurch gekennzeichnet, daß** auf dem zu bedeckenden Bereich der Verglasung eine Schicht auf der Grundlage eines Organosilans aufgebracht und diese Schicht mit der Zusammensetzung auf der Grundlage eines chlorierten Polyolefins überzogen wird.

3. Verfahren nach Anspruch 1, **dadurch gekennzeichnet, daß** auf dem Umfang der Verglasung eine Zusammensetzung auf der Grundlage des chlorierten Polyolefins aufgebracht wird, die ein Organosilan enthält.

4. Verfahren nach einem der vorhergehenden Ansprüche, **dadurch gekennzeichnet, daß** die Schicht/en bei Umgebungstemperatur aufgebracht wird/werden **und daß** anschließend die Temperatur des Glases auf über 80 °C erhöht wird.

5. Verfahren nach Anspruch 4, **dadurch gekennzeichnet, daß** während des Einspritzens des Thermoplasts die Temperatur des Glases auf über 80 °C gehalten wird.

6. Verfahren nach einem der Ansprüche 1 bis 5, **dadurch gekennzeichnet, daß** das thermoplastische Material ein Thermoplast mit olefinischer Matrix ist.

7. Verfahren nach Anspruch 6, **dadurch gekennzeichnet, daß** das thermoplastische Material ein gefülltes Polypropylen EPDM ist.

8. Verglasung, insbesondere eine Verglasung eines Kraftfahrzeugs, die ein mittels Durchführung des Verfahrens gemaß einem der Ansprüche 1 bis 7 erhaltenes Profil besitzt, **dadurch gekennzeichnet, daß** das Profil aus einem thermoplastischen Elastomer und vorzugsweise einem olefinischen Thermoplast besteht.

9. Verglasung nach Anspruch 8, **dadurch gekennzeichnet, daß** das Profil aus einem gefüllten Polypropylen EPDM besteht.

10. Verglasung nach Anspruch 8 oder 9, **dadurch gekennzeichnet, daß** das Profil eine Ummantelungsdichtung ist.

11. Verglasung nach Anspruch 8 oder 9, **dadurch gekennzeichnet, daß** das Profil durch Extrudieren hergestellt ist.

12. Primerzusammensetzung zum Kleben eines thermoplastischen Materials auf Glas gemäß einem der Ansprüche 1 bis 7, die ein chloriertes Polyolefin mit einer Molmasse von 1 000 bis 300 000 zur Grundlage hat, **dadurch gekennzeichnet, daß** sie außerdem ein Organosilan und vorzugsweise ein Epoxysilan enthält.

13. Primerzusammensetzung nach Anspruch 12, **dadurch gekennzeichnet, daß** sie ein modifiziertes chloriertes Polyolefin und vorzugsweise ein mit Maleinsäureanhydrid gepfropftes isotaktisches chloriertes Polypropylen zur Grundlage hat.

14. Primerzusammensetzung nach Anspruch 12 oder 13, **dadurch gekennzeichnet, daß** der Gewichtsanteil des Chlors im chlorierten Polyolefin 10 bis 40 % und vorzugsweise 25 bis 30 % des Gewichts der Primerzusammensetzung ausmacht.

15. Primerzusammensetzung nach einem der Ansprüche 12 bis 14, **dadurch gekennzeichnet, daß** die Molmasse des chlorierten Polyolefins 1 000 bis 300 000 und vorzugsweise 10 000 bis 100 000 beträgt.

16. Primerzusammensetzung nach einem der Ansprüche 12 bis 15, **dadurch gekennzeichnet, daß** der Anteil des Organosilans 0,01 bis 10 % und vorzugsweise 1 % beträgt.
